# EUROPEAN PATENT SPECIFICATION

(11) **EP 3 185 488 B1**
(45) Date of publication and mention of the grant of the patent: **19.10.2022**
(21) Application number: 16002578.9
(22) Date of filing: 02.12.2016
(51) Int. Cl.: H04L 12/46, H04L 9/40

(54) **MULTIPLE CHANNEL SECURED VPN**
MEHRKANALIGES GESICHERTES VPN
VPN SÉCURISÉ À CANAUX MULTIPLES

(30) Priority: 24.12.2015 IL 24334415
(43) Date of publication of application: 28.06.2017
(73) Proprietor: Deutsche Telekom AG, 53113 Bonn (DE)
(72) Inventor: Bronislav, Sidik, 8471428 Beer-Sheva (IL); Yaroslav, Sheremet, 8474705 Beer-Sheva (IL); Rami, Puzis, 7748707 Ashdod (IL); Shabtai, Asaf, 7684200 Hulda (IL)
(74) Representative: Graf von Stosch, Andreas

(56) References cited:
- US-A1- 2004 225 895
- US-A1- 2009 122 990
- US-A1- 2013 318 345

## Description

### Field of Invention

The invention relates in general to systems and methods for providing a secured remote access to a computer, a procedure commonly known in the art as VPN. More specifically the invention relates to a multiple channel VPN structure.

### Background of the Invention

The virtual private network (VPN) technology is commonly used to enable cost-effective, secure remote access to private networks. VPN allows, for example, administrators to take advantage of the Internet to help provide the functionality and security of private WAN connections at a lower cost.

VPN is a part of a comprehensive network access solution that includes support for authentication and authorization services, and advanced network security technologies.

There are two main strategies that are commonly used to provide secure connectivity between a remote user and a server (referred to herein also as "computer").

A dial-up or leased line connection creates a physical connection to a port on a remote access server. However, using dial-up or leased lines to provide network access is very expensive when compared to the cost of providing a network access using an Internet based VPN connection.

The VPN in fact provides an alternative to said expensive option of dial-up or leased line connection. The VPN connection uses either a Point-to-Point Tunneling Protocol (PPTP) or Layer Two Tunneling Protocol/Internet Protocol security (L2TP/IPSec) over an intermediate network, such as the Internet. By using the Internet as a connection medium, the VPN saves the cost of a long-distance phone service, and the hardware costs that are associated with using dial-up or leased line connections. The VPN solution includes advanced security technologies such as data encryption, authentication, authorization, and Network Access Quarantine Control.

As noted, using VPN, remote stationary or mobile users (VPN clients) can connect to a private network. Remote users can work as if their accessing devices (stationary or mobile devices) are physically connected to the network. To accomplish this, VPN clients can use a Connection Manager profile to initiate a connection to a VPN server. The VPN server may optionally communicate with an Internet Authentication Service (IAS) server to authenticate and authorize a user session and maintain the connection until it is terminated by either the VPN client or by the VPN server. All services typically available to a LAN-connected client (including file and print sharing, Web server access, and messaging) are also typically enabled and become available to the remote user by means of the VPN.

In another aspect, a secured channel VPN is also commonly used, not only to enable a conventional remote work which utilizes the server's resources, (memory, databases, peripheral devices, etc.), but also to allow a secured remote access to the Internet from a mobile device. More specifically, the fact that the conventional access from a mobile device to the Internet via a mobile or WiFi connection is relatively unsafe, and is prone to malicious activities, motivates mobile device users to utilize the secured VPN connection even for a conventional surfing from their mobile devices on the Internet, or for "regular" operations that utilize the Internet, such as emails, WhatsApp communications, etc. In such a manner of operation, the access to the Internet is highly secured, and enjoys all the security measures that are associated with the secured VPN connection.

The mere fact that the VPN creates a private channel between the remote user and the server over the public Internet naturally requires the provision to said private channel of the highest possible security (in terms of authentication, encryption, etc.). Indeed, very significant efforts and computation resources are spent to ensure such highest possible security. When said remote client is a mobile device, such provision with the VPN of highest security involves significant consumption of computational resources as well as power consumption from the battery of the device. This significant computational and power consumption creates a serious burden to the use of the VPN, particularly when the client is a mobile device. On the other hand, the highest security level which is associated with a conventional VPN is not really required for all the various activities and communications that are expected to be initiated by the remote user device. For example, if the user activates in his mobile device a bank application that allows access to his bank account, the VPN connection must clearly support a highest security level. However, if the user of the remote mobile device merely activates a movie player in order to stream a movie from an Internet site, a much lower security level is typically satisfactory, particularly when this highest security connection is associated with a very significant power consumption of the battery of mobile device, and of computation resources.

US 2013/318345 discloses a system and method for controlling Quality of Service (QoS) in Virtual Private Network (VPN) in transport network providing a plurality of QoS bearers. However US 2013/318345 is relating to multi channels for the same data that is transmitted in all of the channels, while the QoS is the same and the computational power that is required is very high.

It should be noted herein that although the following description particularly focuses on a VPN structure which is best suited to a mobile client device, still the VPN structure of the invention is also applicable and advantageous when used at a stationary client device.

It is therefore an object of the present invention to provide a VPN structure which saves battery and/or computational resources of the client's device.

It is a particular object of the invention to adapt said VPN structure to a mobile device.

It is still another object of the invention to provide said VPN structure in a most compact manner.

Other objects and advantages of the invention will become apparent as the description proceeds.

### Summary of the invention

The invention concerns a multiple channel VPN system according to independent claim 1 and a corresponding method according to independent claim 7.

Additional aspects of the invention correspond to the dependent claims.

### Brief Description of the Drawings

In the drawings:
- Fig. 1 shows a VPN structure according to a typical prior art system;
- Fig. 2 shows a VPN structure of a system according to an embodiment of the present invention; and
- Fig. 3 shows an exemplary structure of dataset for assigning a VPN channel to respective applications at the client device.

### Detailed Description of Preferred Embodiments of the Invention

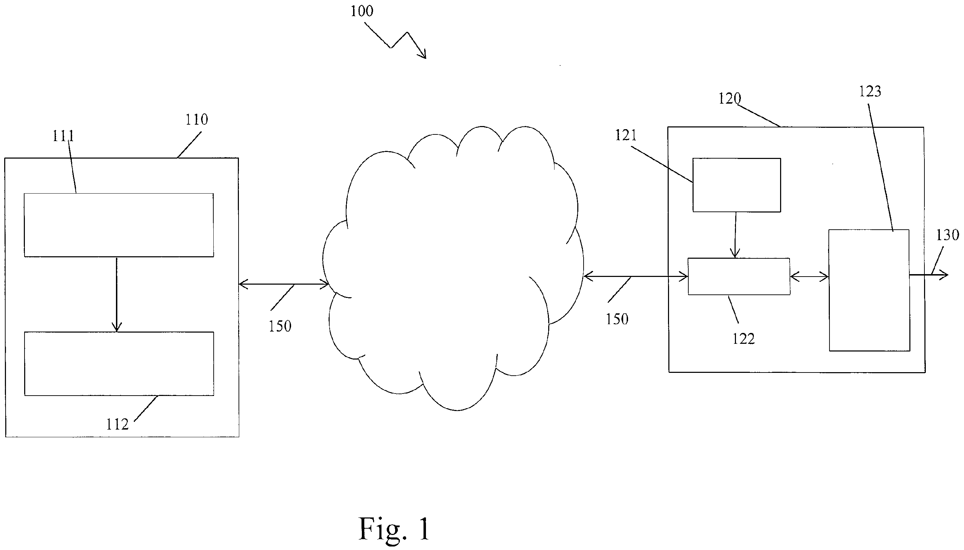

Fig. 1 generally illustrates in blocks-diagram form a typical prior art structure of a VPN connection 100. The VPN 100 comprises at the client device a client VPN manager 111, which opens a single VPN channel 150 with server 120. The server 120, in turn, comprises a server VPN manager 121, which handles the VPN channel at the server 120. Upon establishment of the VPN connection, the client VPN manager 111 and the server VPN manager 121 apply predefined security measures, 112 and 122 respectively, at the client and the server sides of the channel, respectively. The security measures 112 and 122 respectively that are applied over the single channel 150 are conventional (for example, encryption, decryption, authentication, etc.). As according to the prior art structure only a single channel 150 is created, once the security measures are defined by the administrator, substantially same security measures are applied each time that a VPN connection 150 is established. Typically, the security level is the highest possible, in order to assure best security. As noted, as a result of said highest security level, the VPN consumes a significant amount of computational resources from the client device. Moreover, when the client is a mobile device, a significant amount of battery power is also consumed.

Of course, upon establishment of a VPN channel, the remote user may either use the secured channel to access the resources 123 that are available to the server 120 (such as databases, peripheral devices, etc.), or he may access the Internet via the Internet connection 130 which is available at the server 120.

As shown, the VPN managers 111 and 121, respectively, are designed to apply a single set of security measures 112 and 122 respectively, to the single VPN channel 150. This set of security measures is applied irrespective of the content or the specific use of the VPN channel by the user, and is typically the heist possible measures.

It should be noted herein that for the sake of brevity, the above description focuses only on those components that are relevant to the invention, and ignores those well-known issues that are conventional, and have no direct relevancy to the invention.

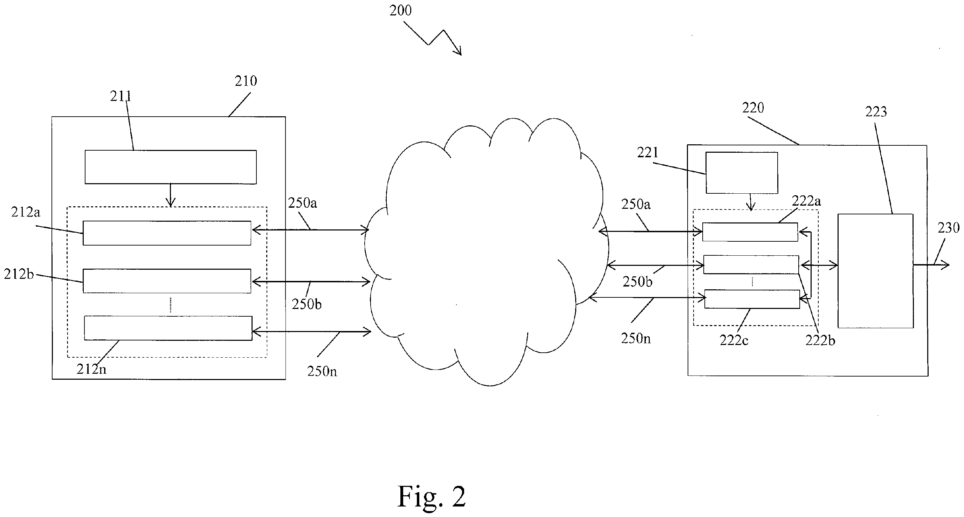

Fig. 2 illustrates a general structure of a VPN according to an embodiment of the present invention. In similar to the prior art structure of Fig. 1, the VPN of the invention comprises a client manager 211, and a server manager 221. The client manager 211 and the server manager 221, however, establish simultaneously a plurality VPN channels 250a-250n, each channel having a different security level than the other. For example, the first VPN channel 250a may have the highest security measures 212a-222a, similar to the level of the security measures 112-122 of the prior art VPN of Fig. 1. The security level of the measures 212b-222b of the second channel 250b may be somewhat lower compared to those of the firs channel 250a, while the security level of the *nth* channel is of the lowest level compared to the other channels 250. Typically, the establishment of about 3-4 channels may suffice, however, this should not be construed as limiting the invention.

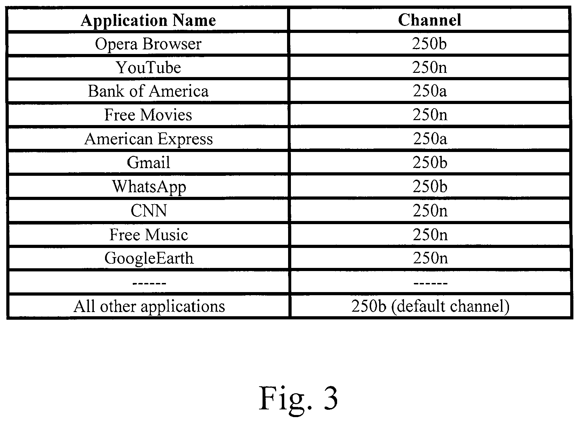

While having a plurality of VPN channels of different security levels, the user is provided with means for assigning a most suitable channel 250 to each application that resides in his device. For example, the VPN structure of the invention may comprise a dataset (for example, in a table form) in which the user assigns a most suitable channel for each specific application. For example, the user may decide to assign the highest security channel 250a to the "Bank of America" application, to the "American Express" application, and to other applications of similar nature. The user may assign the second channel (of medium security level) to applications such as Gmail, "Opera Browser", etc. Finally, the user may decide to assign the channel having the lowest security level to applications such as "Free Movies", "YouTube", etc. The user may also assign the channel having the medium security level (or any other channel) to all others, non-designated applications. Of course, the VPN may comprise more channels than merely channels with "highest", "medium", and "lowest" security levels. Fig. 3 summarizes in an exemplary form the structure of a dataset for directing each specific application to a respective VPN channel.

It should be noted that according to the present invention all the plurality of channels are designed to simultaneously be available for use. The dataset in fact maneuvers a specific application to a specific data channel. Moreover, the fact that several channels (each channel having a different security level) are simultaneously available for a VPN communication enables a simultaneous use of several VPN channels, while each application uses its selected VPN channel according to the dataset, respectively.

The inventors have found that a selective use of a VPN channel having a security level which most suits the requirements and essence of the respective running application, as is done in VPN system of the present invention, saves a very significant amount of computations and battery at the client device. The tradeoff between (a) the creation and use of a plurality of VPN channels between the client device and the server (as in the present invention) against (b) the use of a single channel having a highest security level (as in the prior art) shows that the VPN structure of the present invention is much more advantageous compared to the prior art solution.

While some embodiments of the invention have been described by way of illustration, it will be apparent that the invention can be carried into practice with many modifications, variations and adaptations, and alternative solutions that are within the scope of the accompanying claims.

## Claims

1. A multiple channel VPN system, which comprises a VPN client manager (211) and a VPN server manager (221) at a client device (210) and a server device (220), respectively;
**characterized in that** said VPN client manager (211) and said VPN server manager (221) are configured to simultaneously establish each of a plurality of VPN channels (250a-250n) between said client device (210) and said server device (220), so that said simultaneously established VPN channels are simultaneously available for a VPN communication,
wherein at least one of said simultaneously established VPN channels has a highest security level relative to other simultaneously established VPN channels, at least one of said simultaneously established VPN channels has a lowest security level relative to the other simultaneously established VPN channels, and at least one of said simultaneously established VPN channels has a medium security level relative to the other simultaneously established VPN channels that is a lower security level than the highest security level and higher than the lowest security level.

2. A VPN system according to claim 1, further comprising a VPN channel selection dataset at said client device which includes assignment for each application within said client device of a selective VPN channel from among said multi channels, with a respective security level.

3. A VPN system according to claim 2, wherein said channel selection dataset comprises a default channel assignment for all those applications at the client device for which a VPN channel has not been assigned.

4. A VPN system according to claim 2 , wherein said VPN client manager directs data from each running application to the respective channel based on said dataset.

5. A VPN system according to claim 2, wherein several of said applications communicate simultaneously via several of said VPN channels, according to said dataset assignments.

6. A VPN system according to claim 1, wherein each of the simultaneously established VPN channels has a different security level than the other.

7. A VPN method using a multiple channel VPN system comprising a VPN client manager (211) and a VPN server manager (221) at a client device (210) and a server device (220), respectively, said method comprising using a multi-channel VPN (250a-250n), **characterized in that** each of said VPN channels (250a-250n) is simultaneously established between said client device (210) and said server device (220) by a VPN client manager (211) and a VPN server manager (221), so that said simultaneously established VPN channels are simultaneously available for a VPN communication, wherein at least one of said simultaneously established VPN channels has a highest security level relative to other simultaneously established VPN channels, at least one of said simultaneously established VPN channels has a lowest security level relative to the other simultaneously established VPN channels, and at least one of said simultaneously established VPN channels has a medium security level relative to the other simultaneously established VPN channels that is a lower security level than the highest security level and higher than the lowest security level.

8. A VPN method according to claim 7, further comprising the step of assigning, by a VPN channel selection dataset at said client device, a VPN channel from among said multi-channels for each application within said client device, with a respective security level.

## Patentansprüche

1. Ein Mehrkanal-VPN-System, das einen VPN-Client-Manager (211) und einen VPN-Server-Manager (221) an einem Client-Gerät (210) bzw. einem Server-Gerät (220) umfasst;
**dadurch gekennzeichnet, dass** der VPN-Client-Manager (211) und der VPN-Server-Manager (221) so konfiguriert sind, dass sie gleichzeitig jeden einer Vielzahl von VPN-Kanälen (250a-250n) zwischen dem Client-Gerät (210) und dem Server-Gerät (220) einrichten, so dass die gleichzeitig eingerichteten VPN-Kanäle gleichzeitig für eine VPN-Kommunikation verfügbar sind,
wobei mindestens einer der gleichzeitig eingerichteten VPN-Kanäle eine höchste Sicherheitsstufe relativ zu anderen gleichzeitig eingerichteten VPN-Kanälen hat, mindestens einer der gleichzeitig eingerichteten VPN-Kanäle eine niedrigste Sicherheitsstufe relativ zu den anderen gleichzeitig eingerichteten VPN-Kanälen hat und mindestens einer der gleichzeitig eingerichteten VPN-Kanäle eine mittlere Sicherheitsstufe relativ zu den anderen gleichzeitig eingerichteten VPN-Kanälen hat, die eine niedrigere Sicherheitsstufe als die höchste Sicherheitsstufe und höher als die niedrigste Sicherheitsstufe ist.

2. Ein VPN-System nach Anspruch 1, ferner umfassend einen VPN-Kanal-Auswahldatensatz an dem Client-Gerät, der für jede Anwendung innerhalb des Client-Geräts die Zuweisung eines selektiven VPN-Kanals aus den mehreren Kanälen mit einer jeweiligen Sicherheitsstufe enthält.

3. Ein VPN-System nach Anspruch 2, wobei der Kanalauswahl-Datensatz eine Standardkanal-Zuweisung für all jene Anwendungen an dem Client-Gerät umfasst, für die ein VPN-Kanal nicht zugewiesen wurde.

4. Ein VPN-System nach Anspruch 2, wobei der VPN-Client-Manager Daten von jeder laufenden Anwendung auf der Grundlage des Datensatzes an den jeweiligen Kanal weiterleitet.

5. Ein VPN-System nach Anspruch 2, wobei mehrere der Anwendungen gleichzeitig über mehrere der VPN-Kanäle gemäß den Datensatz-Zuweisungen kommunizieren.

6. Ein VPN-System nach Anspruch 1, wobei jeder der gleichzeitig eingerichteten VPN-Kanäle eine andere Sicherheitsstufe hat als die anderen.

7. Ein VPN-Verfahren unter Verwendung eines Mehrkanal-VPN-Systems, umfassend einen VPN-Client-Manager (211) und einen VPN-Server-Manager (221) an einem Client-Gerät (210) bzw. einem Server-Gerät (220), wobei das Verfahren die Verwendung eines Mehrkanal-VPN (250a-250n) umfasst,
**dadurch gekennzeichnet, dass** jeder der VPN-Kanäle (250a-250n) gleichzeitig zwischen dem Client-Gerät (210) und dem Server-Gerät (220) durch einen VPN-Client-Manager (211) und einen VPN-Server-Manager (221) eingerichtet wird, so dass die gleichzeitig eingerichteten VPN-Kanäle gleichzeitig für eine VPN-Kommunikation verfügbar sind,
wobei mindestens einer der gleichzeitig eingerichteten VPN-Kanäle eine höchste Sicherheitsstufe relativ zu anderen gleichzeitig eingerichteten VPN-Kanälen hat, mindestens einer der gleichzeitig eingerichteten VPN-Kanäle eine niedrigste Sicherheitsstufe relativ zu den anderen gleichzeitig eingerichteten VPN-Kanälen hat und mindestens einer der gleichzeitig eingerichteten VPN-Kanäle eine mittlere Sicherheitsstufe relativ zu den anderen gleichzeitig eingerichteten VPN-Kanälen hat, die eine niedrigere Sicherheitsstufe als die höchste Sicherheitsstufe und höher als die niedrigste Sicherheitsstufe ist.

8. Ein VPN-Verfahren nach Anspruch 7, das ferner den Schritt umfasst, durch einen VPN-Kanalauswahl-Datensatz an dem Client-Gerät einen VPN-Kanal aus den mehreren Kanälen für jede Anwendung innerhalb des Client-Geräts mit einer jeweiligen Sicherheitsstufe zuzuweisen.

## Revendications

1. Système VPN à multiples canaux, qui comprend un gestionnaire de client VPN (211) et un gestionnaire de serveur VPN (221) à un dispositif client (210) et un dispositif serveur (220), respectivement ;
**caractérisé en ce que** ledit gestionnaire de client VPN (211) et ledit gestionnaire de serveur VPN (221) sont configurés afin d'établir simultanément chacun d'une pluralité de canaux VPN (250a à 250n) entre ledit dispositif client (210) et ledit dispositif serveur (220), de sorte que lesdits canaux VPN établis simultanément soient simultanément disponibles pour une communication VPN ;
dans lequel au moins un desdits canaux VPN établis simultanément présente un niveau de sécurité le plus élevé par rapport à d'autres canaux VPN établis simultanément, au moins un desdits canaux VPN établis simultanément présente un niveau de sécurité le plus bas par rapport à d'autres canaux VPN établis simultanément, et au moins un desdits canaux VPN établis simultanément présente un niveau de sécurité moyen par rapport aux autres canaux VPN établis simultanément, qui est un niveau de sécurité inférieur au niveau de sécurité le plus élevé et supérieur au niveau de sécurité le plus bas.

2. Système VPN selon la revendication 1, comprenant en outre un ensemble de données de sélection de canal VPN sur ledit dispositif client qui inclut une attribution pour chaque application dans ledit dispositif client d'un canal VPN sélectif parmi lesdits multi-canaux, avec un niveau de sécurité respectif.

3. Système VPN selon la revendication 2, dans lequel ledit ensemble de données de sélection de canal comprend une attribution de canal par défaut pour toutes les applications au dispositif client pour lesquelles aucun canal VPN n'a été attribué.

4. Système VPN selon la revendication 2, dans lequel ledit gestionnaire de client VPN dirige des données provenant de chaque application en cours de fonctionnement au canal respectif sur la base dudit ensemble de données.

5. Système VPN selon la revendication 2, dans lequel plusieurs desdites applications communiquent simultanément par le biais de plusieurs desdits canaux VPN, selon lesdites attributions d'ensembles de données.

6. Système VPN selon la revendication 1, dans lequel chacun des canaux VPN établis simultanément présente un niveau de sécurité différent de l'autre.

7. Procédé VPN utilisant un système VPN multi-canaux comprenant un gestionnaire de client VPN (211) et un gestionnaire de serveur VPN (221) à un dispositif client (210) et un dispositif serveur (220), respectivement, ledit procédé comprenant l'utilisation d'un VPN multi-canaux (250a à 250n) ;
**caractérisé en ce que** chacun desdits canaux VPN (250a à 250n) est simultanément établi entre ledit dispositif client (210) et ledit dispositif serveur (220) par un gestionnaire de client VPN (211) et un gestionnaire de serveur VPN (221), de sorte que lesdits canaux VPN établis simultanément sont simultanément disponibles pour une communication VPN ;
dans lequel au moins un desdits canaux VPN établis simultanément présente un niveau de sécurité le plus élevé par rapport à d'autres canaux VPN établis simultanément, au moins un desdits canaux VPN établis simultanément présente un niveau de sécurité le plus bas par rapport à d'autres canaux VPN établis simultanément, et au moins un desdits canaux VPN établis simultanément présente un niveau de sécurité moyen relativement aux autres canaux VPN établis simultanément qui est un niveau de sécurité inférieur au niveau de sécurité le plus élevé et supérieur au niveau de sécurité le plus bas.

8. Procédé VPN selon la revendication 7, comprenant en outre l'étape consistant à attribuer, par un ensemble de données de sélection de canal VPN audit dispositif client, un canal VPN parmi lesdits multi-canaux pour chaque application dans ledit dispositif client, avec un niveau de sécurité respectif.
